# EUROPÄISCHE PATENTSCHRIFT

(11) **EP 0 603 150 B1**
(45) Veröffentlichungstag und Bekanntmachung des Hinweises auf die Patenterteilung: **25.09.1996**
(21) Anmeldenummer: 93890228.5
(22) Anmeldetag: 19.11.1993
(51) Int. Cl.: A01J 7/00, A01J 7/02, B08B 9/02

(54) **Reinigungsvorrichtung zum Reinigen von Melkanlagen**
Cleaning device for cleaning milk installations
Dispositif de nettoyage pour nettoyer des installations laitières

(30) Priorität: 17.12.1992 AT 2502/92
(43) Veröffentlichungstag der Anmeldung: 22.06.1994
(73) Patentinhaber: Oberwimmer, Adolf, A-5110 Oberndorf/Salzb. (AT)
(72) Erfinder: Oberwimmer, Adolf, A-5110 Oberndorf/Salzb. (AT)
(74) Vertreter: Hübscher, Heiner, Dipl.-Ing.

(56) Entgegenhaltungen:
- FR-A- 2 676 187
- GB-A- 2 264 156
- US-A- 3 278 961
- US-A- 4 015 618

## Beschreibung

Die Erfindung bezieht sich auf eine Reinigungsvorrichtung zum Reinigen von Melkanlagen mit einem Vorlaufbehälter zur Aufbereitung einer Reinigungsflüssigkeit und einer Spülvorrichtung für das Melkzeug od. dgl. der Melkanlage, welcher über einen Vor- und einen Rücklaufanschluß in einen Reinigungskreislauf zur Versorgung der Spülvorrichtung mit Reinigungsflüssigkeit eingebundene Vorlaufbehälter einen Zu-und einen Ablauf, eine Reinigungsmittel-Dosiereinrichtung und eine Heizeinrichtung aufweist.

Das die Melkbecher, die Milchbehälter, das Milchleitungs-und Schleusensystem u. dgl. umfassende Melkzeug einer Melkanlage muß nach jedem Melkvorgang gereinigt werden, wozu mit der Melkanlage meist von vornherein auch eine Reinigungsvorrichtung kombiniert ist. Die Reinigungsvorrichtung bildet einen Reinigungskreislauf, der von einem Vorlaufbehälter zu einer Spülvorrichtung und wieder zurück zum Vorlaufbehälter führt, wobei das zu reinigende Melkzeug an der Spülvorrichtung anschließbar ist und dadurch mit Reinigungsflüssigkeit beaufschlagt werden kann. Im Vorlaufbehälter wird die Reinigungsflüssigkeit aufbereitet, indem eine entsprechende Wassermenge mit einem Reinigungsmittel versetzt und aufgeheizt wird, welche Reinigungsflüssigkeit dann mehrmals durch den Reinigungskreislauf zur Durchführung des Reinigungsvorganges gepumpt wird. Bisher wird nun für jeden Reinigungsvorgang frisches Wasser durch den Zulauf in den Vorlaufbehälter eingefüllt, hier aufgeheizt und mit Reinigungsmittel vermischt, worauf nach Abschluß des Reinigungsvorganges die warme Reinigungsflüssigkeit durch Öffnen des Ablaufes in den Kanal entsorgt wird. Das bedeutet neben der Umweltbelastung einen erheblichen Energieaufwand zum Aufheizen der Reinigungsflüssigkeit und einen beträchtlichen Reinigungsmittelbedarf, da die Reinigungsflüssigkeit für jeden Reinigungsvorgang neu angesetzt werden muß. Wird außerdem berücksichtigt, daß zur einwandfreien Reinigung von Melkzeug zumindest zwei verschiedene Reinigungsvorgänge erforderlich sind, nämlich einer mit einer fettlösenden alkalischen Reinigungsflüssigkeit und einer mit einer desinfizierenden kalk- und milchsteinlösenden sauren Reinigungsflüssigkeit, dann sind die bekannten Reinigungsanlagen außerdem umständlich zu handhaben und kaum automatisierbar, da für jeden der Waschvorgänge händisch das jeweils erforderliche Waschmittel dem Waschwasser im Vorlaufbehälter zudosiert werden muß.

Der Erfindung liegt daher die Aufgabe zugrunde, diese Mängel zu beseitigen und eine Reinigungsanlage der eingangs geschilderten Art zu schaffen, die sich durch ihren rationellen Betrieb, ihre einfache Bedienung und nicht zuletzt durch ihre Leistungsfähigkeit auszeichnet.

Die Erfindung löst diese Aufgabe dadurch, daß wenigstens ein Vorratsbehälter über Verbindungsleitungen an den Vorlaufbehälter angeschlossen und wahlweise Reinigungsflüssigkeit aus dem Vorlaufbehälter in den Vorratsbehälter oder aus dem Vorratsbehälter zurück in den Vorlaufbehälter förderbar ist, wobei vorzugsweise eine Verbindungsleitung über die Dosiereinrichtung führt. Durch die einfache Maßnahme, dem Vorlaufbehälter einen Vorratsbehälter zuzuordnen, läßt sich die einmal aufbereitete Reinigungsflüssigkeit zu mehreren Reinigungsvorgängen nutzen, da sie nach jedem Reinigungsvorgang statt durch den Ablauf in den Kanal über die Verbindungsleitung in den Vorratsbehälter gepumpt wird, wo sie bis zum nächsten Reinigungsvorgang aufbewahrt werden kann. Für den nächsten Reinigungsvorgang erfolgt dann ein Zurückfördern der Reinigungsflüssigkeit aus dem Vorratsbehälter in den Vorlaufbehälter, wobei gleichzeitig vorzugsweise der Reinigungsmittelgehalt überprüft und bedarfsweise Reinigungsmittel nachdosiert wird. Vom Vorlaufbehälter aus läuft dann wie üblich der Reinigungszyklus ab, nach dessen Abschluß wieder ein Rückfördern in den Vorratsbehälter erfolgt, so lange bis die Reinigungsflüssigkeit hinsichtlich ihrer Reinigungswirkung aufgebraucht ist. Wird für jede zu verwendende Reinigungsflüssigkeit ein eigener Vorratsbehälter angeordnet, läßt sich wahlweise ein Reinigungszyklus mit der einen oder mit der anderen Reinigungsflüssigkeit vornehmen und ohne umständliches Manipulieren mit Reinigungsmittel einerseits und Reinigungsflüssigkeit anderseits läßt sich der gewünschte Reinigungsablauf steuern. Da bereits vorbereitete Reinigungsflüssigkeit in den Vorlaufbehälter eingefüllt wird, sinkt die Aufbereitungszeit der Reinigungsflüssigkeit im Vorlaufbehälter und der Reinigungsvorgang ist schneller durchführbar. Abgesehen davon wird durch das Rezirkulieren der Reinigungsflüssigkeit, bei dem nur bedarfsweise Reinigungsmittel oder gegebenenfalls Frischwasser zudosiert werden, der Reinigungsmittelbedarf und der Frischwasserbedarf gesenkt und die Umweltbelastung beträchtlich gemindert.

Sind zwei jeweils für sich an den Vorlaufbehälter angeschlossene Vorratsbehälter für zwei verschiedene Reinigungsflüssigkeiten vorgesehen, können die überlicherweise durchzuführenden Reinigungsvorgänge in beliebiger Reihenfolge nacheinander durchgeführt werden und es wird für beide Reinigungszyklen ein besonders wirtschaftlicher Betrieb gewährleistet.

Besonders vorteilhaft ist es, wenn die Vorratsbehälter durch Wärmeaustausch über eine Fremdwärmequelle erwärmbar sind, da so auf energiesparende Weise ein stärkeres Abkühlen der Reinigungsflüssigkeit im Vorratsbehälter vermieden werden kann und für einen Reinigungszyklus sofort vorgewärmte Reinigungsflüssigkeit zur Verfügung steht, die nur mehr kurzzeitig auf die gewünschte Reinigungstemperatur innerhalb des Vorlaufbehälters erwärmt zu werden braucht. Da als Fremdwärmequelle jede geeignete, zur Verfügung stehende Wärmequelle, vorzugsweise die Abwärme verschiedener Feuerungsanlagen und Aggregate, genutzt werden kann, wird der Betrieb der Reinigungsanlage hinsichtlich der Energiebilanz und außerdem durch die sich verringernde Aufwärmzeit auch hinsichtlich der Betriebsbereitschaft beträchtlich verbessert.

Es sind bereits Vakuumpumpenaggregate für Melkanlagen bekannt, bei denen zur Nutzung der Abwärme die aus Vakuumpumpe und Antriebsmotor bestehende Baueinheit in einen Warmwasserbehälter eingesetzt ist. Bildet dieser Warmwasserbehälter die Fremdwärmequelle für die Vorratsbehälter, entsteht eine besonders zweckmäßige Reinigungsanlage, da die ohnehin bereits genutzte Abwärme der Melkanlagenaggregate nun zusätzlich auch zur Warmhaltung der Reinigungsflüssigkeit für die der Melkanlage zugehörende Reinigungsvorrichtung weiter nutzbar ist.

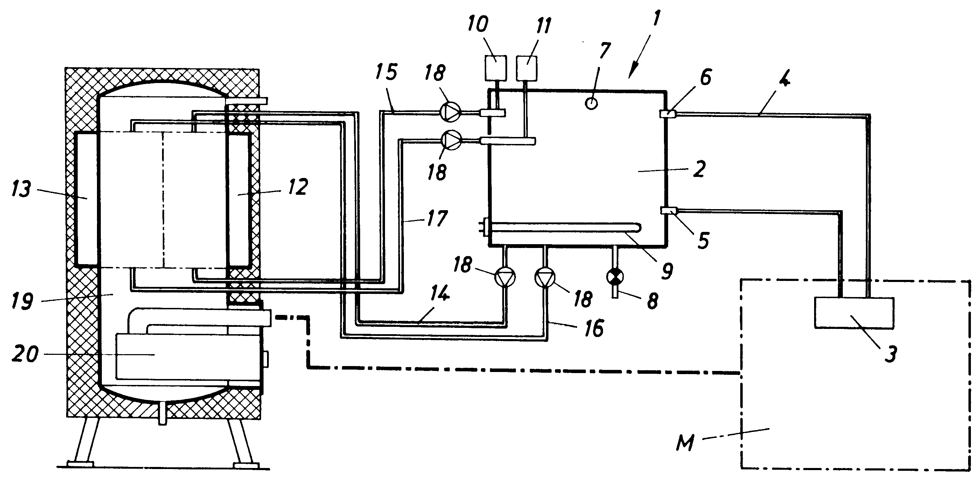

In der Zeichnung ist eine erfindungsgemäße Reinigungsvorrichtung beispielsweise an Hand eines Anlagenschemas näher veranschaulicht.

Eine Reinigungsvorrichtung 1 zum Reinigen von Melkzeug od. dgl. einer nicht näher dargestellten Melkanlage M umfaßt einen Vorlaufbehälter 2 zum Aufbereiten einer Reinigungsflüssigkeit und eine Spülvorrichtung 3 zum Anschluß des zu reinigenden Melkzeuges. Ein Reinigungskreislauf 4 versorgt die Spülvorrichtung 3 mit Reinigungsflüssigkeit, wozu der Vorlaufbehälter 2 über einen Vorlaufanschluß 5 und einen Rücklaufanschluß 6 in den Reinigungskreislauf 4 eingebunden ist. Der Vorlaufbehälter 2 weist einen Zulauf 7 und einen Ablauf 8 auf und ist mit einer Heizeinrichtung 9 ausgerüstet. Dosiereinrichtungen 10, 11 erlauben das Zumischen verschiedener Reinigungsmittel für die Aufbereitung von Reinigungsflüssigkeit.

Dem Vorlaufbehälter 2 sind zwei Vorratsbehälter 12, 13 zugeordnet, welche Vorratsbehälter 12, 13 jeweils über eigene Verbindungsleitungen 14, 15; 16, 17, die jeweils über eine eigene Förderpumpe 18 führen, mit dem Vorlaufbehälter 2 verbunden sind, wobei die in den Vorlaufbehälter 2 rückführenden Verbindungsleitungen 15, 17 mit den Dosiereinrichtungen 10, 11 zusammenwirken. Die Vorratsbehälter 12, 13 bilden einen Mantel um einen Warmwasserbehälter 19, in den zur Abwärmenutzung eine aus Vakuumpumpe und Antriebsmotor bestehende Baueinheit 20 der nicht weiter dargestellten Melkanlage eingesetzt ist, so daß der Warmwasserbehälter 19 als Wärmequelle zum Aufwärmen der Vorratsbehälter 12, 13 dient.

Zur Reinigung des Melkzeuges wird in den Vorlaufbehälter 2 über den Zulauf 7 Wasser in entsprechender Menge eingefüllt und beispielsweise über die Dosiereinrichtung 10 ein bestimmtes Reinigungsmittel zudosiert. Nach Aufheizung über die Heizeinrichtung 9 erfolgt über den Reinigungskreislauf 4 die Reinigung der an die Spülvorrichtung 3 angeschlossenen Melkzeuge od. dgl., wobei es mehrere Spülvorgänge gibt. Nach Abschluß dieses Reinigungsvorganges wird nun die Reinigungsflüssigkeit aus dem Vorlaufbehälter 2 über die Leitung 14 in den Vorratsbehälter 12 gepumpt, wo sie bis zum nächsten Einsatz vorrätig gehalten wird. Ist für den nächstfolgenden Reinigungsvorgang eine andere Reinigungsflüssigkeit erforderlich, wird in den Vorlaufbehälter 2 neuerlich Wasser über den Zulauf 7 eingefüllt und diesem Wasser dann über die Dosiereinrichtung 11 das gewünschte Reinigungsmittel zugemischt. Auch diese Reinigungsflüssigkeit wird wieder aufgeheizt und zur Durchführung des gewünschten Reinigungsvorganges durch den Reinigungskreislauf 4 geschickt. Nach Abschluß dieses zweiten Zyklus wird die zweite Reinigungsflüssigkeit über die Verbindungsleitung 16 in den zweiten Vorratsbehälter 13 gepumpt und hier aufbewahrt, während der Vorlaufbehälter 2 etwa für eine Spülung der Reinigungsanlage 1 mit reinem Wasser od. dgl. bereit ist oder leer bleibt.

Zur Durchführung eines neuen Reinigungsvorganges, beispielsweise mit der ersten Reinigungsflüssigkeit, wird nun diese Reinigungsflüssigkeit aus dem Vorratsbehälter 12 über die Verbindungsleitung 15 in den Vorlaufbehälter 2 zurückgepumpt, wobei in der Dosiereinrichtung 10 der Reinigungsmittelgehalt dieser Reinigungsflüssigkeit geprüft und bedarfsweise nachdosiert wird. Da die Reinigungsflüssigkeit im Vorratsbehälter 12 warmgehalten wurde, steht bereits vorgewärmte Reinigungsflüssigkeit zur Verfügung, die nur kurzzeitig über die Heizeinrichtung 9 auf die gewünschte Reinigungstemperatur aufgeheizt zu werden braucht, um sofort für die eigentliche Reinigungsaufgabe aufbereitet zu sein. Nach Abschluß dieses Reinigungsvorganges erfolgt wieder die Rückführung in den Vorratsbehälter 12, worauf die Reinigungsanlage 1 beispielsweise für einen neuen Reinigungsvorgang mit der zweiten Reinigungsflüssigkeit bereit ist, die dazu aus dem Vorratsbehälter 13 über die Leitung 17 in den Vorratsbehälter 2 gepumpt wird, wobei auch diese Reinigungsflüssigkeit über die Dosiereinrichtung 11 geprüft und gegebenenfalls mit neuem Reinigungsmittel versetzt wird. Je nach Bedarf steht daher kurzzeitig die eine oder andere Reinigungsflüssigkeit für die Reinigungsanlage 1 zur Verfügung und es ist selbstverständlich auch möglich, mit reinem Wasser zwischendurch zu spülen. Ist die eine oder andere Reinigungsflüssigkeit verbraucht, wird diese Reinigungsflüssigkeit aus dem Vorlaufbehälter 2 durch Öffnen des Ablaufes 8 abgelassen und eine neue Flüssigkeit aufbereitet.

Durch das Rezirkulieren der Reinigungsflüssigkeiten einerseits und die Warmhaltung der Reinigungsflüssigkeiten in den Vorratsbehältern anderseits ist ein überaus rationeller, energiesparender und umweltschonender Reinigungsbetrieb sichergestellt.

## Patentansprüche

1. Reinigungsvorrichtung (1) zum Reinigen von Melkanlagen (M), mit einem Vorlaufbehälter (2) zur Aufbereitung einer Reinigungsflüssigkeit und einer Spülvorrichtung (3) für das Melkzeug od. dgl. der Melkanlage (M), welcher über einen Vor- und einen Rücklaufanschluß (5, 6) in einen Reinigungskreislauf (4) zur Versorgung der Spülvorrichtung (3) mit Reinigungsflüssigkeit eingebundene Vorlaufbehälter (2) einen Zu- und einen Ablauf (7, 8), eine Reinigungsmittel-Dosiereinrichtung (10, 11) und eine Heizeinrichtung (9) aufweist, dadurch gekennzeichnet, daß wenigstens ein Vorratsbehälter (12, 13) über Verbindungsleitungen (14, 15; 16, 17) an den Vorlaufbehälter (2) angeschlossen und wahlweise Reinigungsflüssigkeit aus dem Vorlaufbehälter (2) in den Vorratsbehälter (12, 13) oder aus dem Vorratsbehälter (12, 13) zurück in den Vorlaufbehälter (2) förderbar ist, wobei vorzugsweise eine Verbindungsleitung (15, 17) über die Dosiereinrichtung (10, 11) führt.

2. Reinigungsvorrichtung nach Anspruch 1, dadurch gekennzeichnet, daß zwei jeweils für sich an den Vorlaufbehälter (2) angeschlossene Vorratsbehälter (12, 13) für zwei verschiedene Reinigungsflüssigkeiten vorgesehen sind.

3. Reinigungsvorrichtung nach Anspruch 1 oder 2, dadurch gekennzeichnet, daß die Vorratsbehälter (12, 13) durch Wärmeaustausch über eine Fremdwärmequelle (19) erwärmbar sind.

4. Reinigungsvorrichtung nach Anspruch 3, dadurch gekennzeichnet, daß ein Warmwasserbehälter (19), in den zur Abwärmenutzung eine aus Vakuumpumpe und Antriebsmotor bestehende Baueinheit (20) einer Melkanlage eingesetzt ist, die Fremdwärmequelle für die Vorratsbehälter (12, 13) bildet.

## Claims

1. A device (1) for cleaning milking installations (M) and comprising an initial container (2) for preparing a cleaning liquid and a rinsing device (3) for the milking unit or the like in the milking installation (M), which comprises initial containers (2) connected via an outward and a return connection (5, 6) in a cleaning circuit (4) for supplying the rinsing device (3) with cleaning liquid, an inlet and an outlet (7, 8), a cleaning-agent metering device (10, 11) and a heating device (9), characterised in that at least one storage container (12, 13) is connected by lines (14, 15; 16, 17) to the initial container (2) and cleaning liquid can optionally be conveyed from the initial container (2) to the storage container (12, 13) or from the storage container (12, 13) back to the initial container (2), one line (15, 17) preferably going via the metering device (10, 11).

2. A cleaning device according to claim 1, characterised in that two storage containers (12, 13) each independently connected to the initial container (2) are provided for two different cleaning liquids.

3. A cleaning device according to claim 1 or 2, characterised in that the storage container (12, 13) is heatable by heat exchange via an external heat source (19).

4. A cleaning device according to claim 3, characterised in that the external heat source for the storage containers (12, 13) is a hot-water container (19) in which a constructional unit (20) of a milking installation comprising a vacuum pump and drive motor is inserted for using waste heat.

## Revendications

1. Dispositif de nettoyage (1), pour nettoyer des installations de traite (M), comportant un premier bassin de décantation (2) pour la préparation d'un liquide de nettoyage et un dispositif de rinçage (3) pour l'appareil à traire ou analogue, issu de l'installation de traite (M), ledit premier bassin de décantation (2), qui est intégré, par l'intermédiaire d'un raccordement de départ et d'un raccordement de retour (5, 6), dans un circuit de nettoyage (4), pour assurer l'alimentation du dispositif de rinçage (3) en liquide de nettoyage, présentant une amenée et une évacuation (7, 8), un dispositif de dosage (10, 11) pour le produite de nettoyage et un dispositif de chauffage (9), caractérisé en ce qu'au moins un récipient de stockage (12, 13) est raccordé au premier bassin de décantation (2) par l'intermédiaire de conduites de liaison (14, 15; 16, 17) et, au choix, du liquide de nettoyage issu du premier bassin de décantation (2) peut être transporté des le récipient de stockage (12, 13) ou transporté du récipient de stockage (12, 13) dans le premier bassin de décantation (2), une conduite de liaison (15, 17) assurant de préférence un passage par le dispositif de dosage (10, 11).

2. Dispositif de nettoyage selon la revendication 1, caractérisé en ce que deux récipients de stockage (12, 13), chacun raccordé au premier bassin de décantation (2), sont prévus pour deux liquides de nettoyage différents.

3. Dispositif de nettoyage selon la revendication 1 ou 2, caractérisé en ce que les récipients de stockage (12, 13) peuvent être chauffés par échange de chaleur, par l'intermédiaire d'une source de chaleur externe (19).

4. Dispositif de nettoyage selon la revendication 3, caractérisé en ce qu'un récipient d'eau chaude (19), dans lequel un ensemble de construction (20) constitué d'une pompe à vide et d'un moteur d'entraînement est mis en oeuvre pour une unité de traits, en vue d'exploiter la chaleur d'évacuation, constitue la source de chaleur externe des récipients de stockage (12, 13).
